# EUROPÄISCHE PATENTSCHRIFT

(11) **EP 1 013 912 B1**
(45) Veröffentlichungstag und Bekanntmachung des Hinweises auf die Patenterteilung: **20.08.2003**
(21) Anmeldenummer: 99890397.5
(22) Anmeldetag: 21.12.1999
(51) Int. Cl.: F02D 13/02

(54) **Verfahren zum Betreiben einer fremdgezündeten Brennkraftmaschine**
Method of operating a spark ignited combustion engine
Procédé pour faire fonctionner un moteur à combustion à allumage commandé

(30) Priorität: 23.12.1998 AT 86098 U
(43) Veröffentlichungstag der Anmeldung: 28.06.2000
(73) Patentinhaber: AVL List GmbH, 8020 Graz (AT)
(72) Erfinder: Mayerhofer, Ulrich, Dipl.-Ing., 8502 Lannach (AT); Kapus, Paul Dr., 8045 Graz (AT)
(74) Vertreter: Babeluk, Michael, Dipl.-Ing. Mag.

(56) Entgegenhaltungen:
- EP-A- 0 568 214
- DE-A- 4 108 454
- US-A- 5 239 960
- US-A- 5 709 190

## Beschreibung

Die Erfindung betrifft ein Verfahren zum Betreiben einer vorzugsweise aufgeladenen Brennkraftmaschine mit Fremdzündung, insbesondere einer Viertakt-Brennkraftmaschine, mit zumindest einem Einlassventil pro Zylinder und einer Einrichtung zur Verstellung der Schließzeit des Einlassventils, mit einem unveränderbaren geometrischen Verdichtungsverhältnis, welches ≥12:1, vorzugsweise ≥13:1, besonders vorzugsweise ≥14:1 beträgt, und einem während des Motorbetriebes an zumindest einem Motorbetriebspunkt durch Veränderung der Steuerzeit des Einlassventils veränderbaren effektiven Verdichtungsverhältnis, wobei im Volllastbereich das effektive Verdichtungsverhältnis reduziert wird und zur Reduktion des effektiven Verdichtungsverhältnisses im Vollastbereich der Schließzeitpunkt des Einlassventils um 10° bis 70° Kurbelwinkel, vorzugsweise um 20° bis 60° Kurbelwinkel, besonders vorzugsweise um 30° bis 50° Kurbelwinkel nach Spät verstellt wird.

Für eine Optimierung des Kraftstoffverbrauches einer aufgeladenen Otto-Brennkraftmaschine ist vor allem das Verdichtungsverhältnis des Motors von Bedeutung. Im Hauptbetriebsbereich des Motors im Fahrzyklus im niedrigen bis mittleren Lastbereich sollte zur Wirkungsgradsteigerung ein relativ hohes Verdichtungsverhältnis von ca. 14:1 gewählt werden. Bei höheren Lasten bedeutet ein dermaßen hohes Verdichtungsverhältnis allerdings eine unzulässig hohe Klopfempfindlichkeit, was durch eine extreme Spätstellung der Zündung kompensiert werden müßte. Dies hat aber in zweierlei Hinsicht eine deutliche Verschlechterung des Kraftstoffverbrauches zur Folge: einerseits reduziert sich durch die späte Lage der Verbrennung der Wirkungsgrad, andererseits macht die daraus resultierende Erhöhung der Abgastemperaturen eine Anreicherung des Kraftstoff/Luft-Gemisches erforderlich.

Zudem würde im Bereich nahe der Volllast der resultierende Verdichtungsenddruck bereits zur Selbstzündung führen, was eine hohe Belastung für das Triebwerk darstellt und im Extremfall sogar zur Zerstörung des Motors führen kann. Dies bedeutet, dass eine optimale Verdichtung für den gesamten Kennfeldbereich nicht existiert, was wiederum ein variables Verdichtungsverhältnis zur Steigerung des Gesamtwirkungsgrades erfordert.

Ein variables Verdichtungsverhältnis wird üblicher Weise durch Veränderung des geometrischen Verdichtungsverhältnisses erreicht. Die Veränderung des geometrischen Verdichtungsverhältnisses ist allerdings mit einem sehr hohen konstruktiven Aufwand verbunden, wobei sich Probleme mit den mechanischen Reibungsverlusten, dem Platzbedarf, dem Gewicht und/oder der Haltbarkeit eines solchen Systems ergeben. Deshalb werden aufgeladene Brennkraftmaschinen häufig mit einem relativ geringen, auf den Volllastpunkt ausgelegten geometrischen Verdichtungsverhältnis ausgeführt, was allerdings wesentlich Wirkungsgradeinbußen im Teillastbereich mit sich bringt.

Aus der US 5 709 190 A ist es bekannt, durch Veränderung der Einlasssteuerzeit das effektive Verdichtungsverhältnis bei niederen und mittleren Drehzahlen zu reduzieren, wobei das Einlassventil geschlossen wird, noch bevor der Kolben den Einlasshub im unteren Totpunkt erreicht.

Weiters ist aus der DE 4 012 490 A1 eine gemischverdichtende Zweitakt-Brennkraftmaschine bekannt, bei der mit abnehmender Last der Verdichtungshub durch lastabhängiges Vorverlegen des Schließzeitpunktes des Einlassventils vergrößert wird. Dadurch sollen die aus der Verschlechterung der Spülung bei niedrigen Maschinenlasten resultierenden Schwierigkeiten hinsichtlich Verzögerung und Vollständigkeit der Verbrennung verringert werden.

Die DE 41 08 454 A1 beschreibt einen Viertaktmotor mit indirekter Einspritzung und Fremdzündung, bei dem das Expansionsverhältnis im Bereich 11:1 bis 16:1 eingestellt werden kann. Durch Verzögern des Schließens des Einlassventils kann das effektive Kompressionsverhältnis verändert werden. Der späte Schließzeitpunkt im Volllastbetrieb hat allerdings den Nachteil, dass ein Teil des Kraftstoffes in das Saugsystem zurückgeblasen wird, was sich nachteilig auf den Gesamtwirkungsgrad auswirkt.

Aufgabe der Erfindung ist es, auf möglichst einfache Weise bei einer Brennkraftmaschine, insbesondere bei einer aufgeladenen Brennkraftmaschine, sowohl im Teillast- als auch im Vollastbereich einen hohen Gesamtwirkungsgrad zu erreichen.

Erfindungsgemäß erfolgt dies dadurch, dass zumindest während des Betriebes mit reduziertem Verdichtungsverhältnis eine Ladungsschichtung im Brennraum erzeugt wird. Dadurch wird ein Rückblasen des Kraftstoffes In das Saugsystem verhindert. Das unveränderliche hohe geometrische Verdichtungsverhältnis bewirkt, dass im Teillastbereich ein hoher Wirkungsgrad möglich ist. Durch die Reduktion des effektiven Verdichtungsverhältnisses bei höheren Lasten wird verhindert, dass die Klopfempfindlichkeit unzulässig anstelgt, ohne dass wesentliche Wirkungsgradeinbußen hingenommen werden müssen.

Durch die Verschiebung des Schließzeitpunktes des Einlassventiles nach Spät wird das effektive Verdichtungsverhältnis und somit die Zylinderladung reduziert. Damit erfolgt eine weitere Absenkung der Motorleistung bzw. des effektiven Mitteldrucks. Durch die geänderten Bedingungen im Zylinder und die sinkende Klopfneigung zufolge des verringerten Verdichtungsenddruckes kann der Zündzeitpunkt deutlich nach Früh verlegt werden. Dies bewirkt weiters, dass trotz der deutlichen Reduktion der Zylinderladung die Motorleistung bei Volllast nicht sinkt. Als Folge des frühen Zündzeitpunktes und Infolge des vollen unveränderten hohen Expansionsverhältnisses sinkt auch die Abgastemperatur im Vergleich zu einem unveränderten effektiven Verdichtungsverhältnis bei Volllast, was eine deutliche Abmagerung des Kraftstoff/Luftverhältnisses erlaubt. Dadurch kann wegen der verbesserten Ausnutzung der im Zylinder vorhandenen Luft eine weitere Steuerung der Motorlast erzielt werden. Die letztendlich resultierende erzielbare Motorleistung liegt wegen dem besseren inneren Wirkungsgrad höher als bei einer optimalen Anpassung des geometrischen Verdichtungsverhältnisses.

Versuche haben gezeigt, dass ein besonders hoher Gesamtwirkungsgrad erzielt werden kann, wenn der Schließzeitpunkt des Einlassventiles um 10° bis 70° Kurbelwinkel, vorzugsweise um 20° bis 60° Kurbelwinkel, besonders vorzugsweise um 30° bis 50° Kurbelwinkel nach Spät verstellt wird. Bei entsprechender Gestaltung des Nockenprofiles kann die Verstellung des Schließzeitpunktes durch einen einfachen Phasenschieber erfolgen.

Die leichte Ladungsschichtung wird bevorzugt durch einen geringen Drall der Einlassströmung erzeugt, wobei beispielsweise die Luft in den Brennraum über zwei bei Volllast ungedrosselte Einlasskanäle zugeführt wird, von denen zumindest einer drallerzeugend konzipiert sein kann.

Das Rückblasen des Kraftstoffes kann aber auch bei Einspritzmotoren dadurch verhindert werden, dass zumindest während des Betriebes mit reduziertem Verdichtungsverhältnis der Kraftstoff zumindest teilweise saugsynchron eingespritzt wird. Die Einspritzung sollte dabei bis zum Schließende des Einlassventiles bzw. bis zum unteren Totpunkt des Ansaugtaktes beendet sein. Dies gilt insbesonders für indirekte Kraftstoffeinspritzung.

Bei direkter Kraftstoffeinspritzung in den Brennraum können Anfang und Ende der Einspritzung in gewissen Grenzen frei gewählt werden, und somit ein Rückblasen des Kraftstoffs steuerungstechnisch schon verringert werden. Da aber die Einspritzdauer nicht beliebig kurz gewählt werden kann, wirkt sich eine leichte Drallströmung auch hier vorteilhaft aus.

Das erfindungsgemäße Verfahren lässt sich besonders vorteilhaft bei einer fremdgezündeten Viertakt-Brennkraftmaschine mit zumindest zwei Einlasskanälen pro Zylinder anwenden, bei der ein Einlasskanal drallerzeugend, vorzugsweise als Tangentialkanal oder Spiralkanal, und ein Einlasskanal als Neutralkanal, also als drallfreier bzw. drallarmer Kanal, ausgebildet ist. Das Verfahren eignet sich sowohl für direkt als auch für indirekt einspritzende Motoren.

Die Erfindung wird anhand der Diagramme näher erläutert. Es zeigen
- Fig. 1: den Einfluss des geometrischen Verdichtungsverhältnisses und
- Fig. 2: den Einfluss des effektiven Verdichtungsverhältnisses auf den effektiven Mitteldruck.

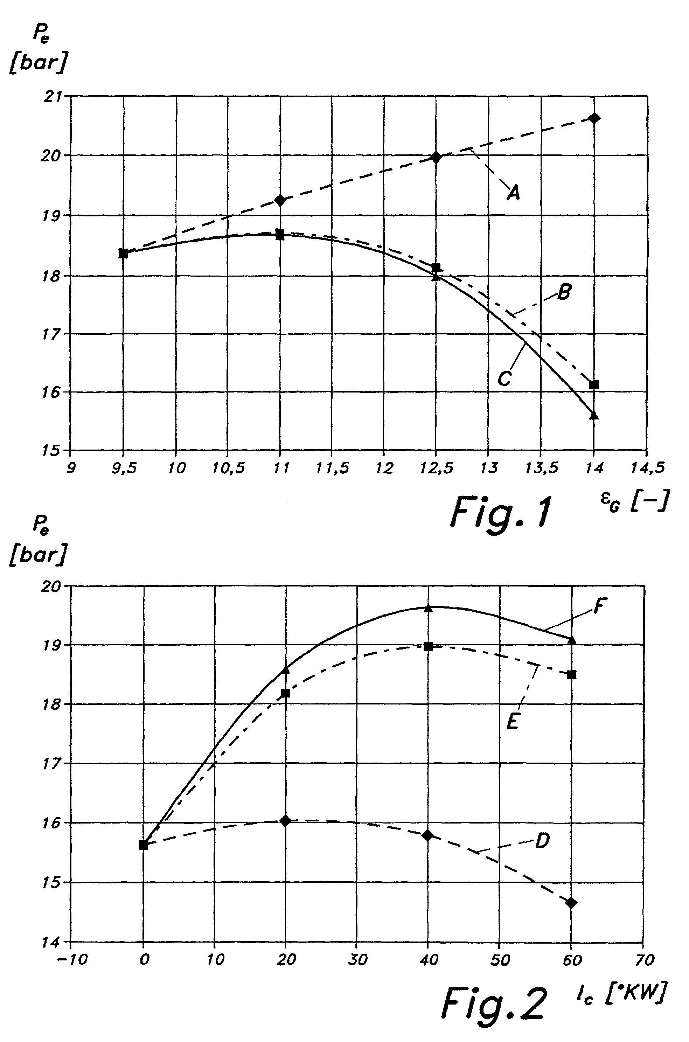

In Fig. 1 ist der Einfluss des geometrischen Verdichtungsverhältnisses ε_{G} auf den erzielbaren effektiven Mitteldruck pₑ bei konstantem Druckverhältnis am Verdichter dargestellt. Daraus ist ersichtlich, dass theoretisch die erzielbare Motorleistung mit zunehmendem Verdichtungsverhältnis ε_{G} steigen würde (strichlierte Linie A). Aus Gründen der Klopfneigung eines Otto-Motors muss jedoch der Zündzeitpunkt in Richtung Spät verstellt werden. Dadurch reduziert sich die erzielbare Motorleistung deutlich, was durch die strichpunktierte Linie B in Fig. 1 eingezeichnet ist, wobei ab einem bestimmten Verdichtungsverhältnis ε_{G} eine Selbstzündung durch den Verdichtungsenddruck entsteht. Zusätzlich erfordert die extreme Spätstellung des Zündzeitpunktes wegen des Anstieges der Abgastemperatur eine Anfettung des Kraftstoffes/Luft-Gemisches, um eine Zerstörung des Turboladers und/oder des Motors zu verhindern. Der durch die durchgezogene Linie C dargestellte daraus resultierende Verlauf der erzielbaren Motorleistung zeigt im Ausführungsbeispiel ein Maximum bei einem Verdichtungsverhältnis von ca. 11:1.

In Fig. 2 ist der Einfluss des effektiven Verdichtungsverhältnisses ε_{E} auf den effektiven Mitteldruck p_{e,} wobei die Auswirkungen einer Absenkung des effektiven Verdichtungsverhältnisses ε_{E} auf Basis einer geometrischen Grundverdichtung ε_{G} von 14:1 untersucht wurden. In Fig. 2 ist auf der Abszisse die Verschiebung des Einlassschließpunktes I_{C} in Grad Kurbelwinkel KW aufgetragen, wobei mit 0° der Normaleinschluss eingetragen ist, welcher beispielsweise bei einer geometrischen Grundverdichtung ε_{G} von 14:1 bei etwa 560° bis 610° nach dem oberen Totpunkt liegt. Durch die Verschiebung nach Spät des Schließzeitpunktes I_{c} des Einlassventiles wird das Verdichtungsverhältnis ε_{E} verändert. Aus Fig. 2 ist ersichtlich, dass ein verspätetes Schließen der Einlassventile eine deutliche Reduktion der Zylinderladung bewirkt (strichlierte Linie D) und somit eine weitere Absenkung der Motorleistung bzw. des effektiven Mitteldruckes pₑ erfolgt. Durch die geänderten Bedingungen im Zylinder zufolge des verringerten Verdichtungsenddruckes kann jedoch der Zündzeitpunkt wieder deutlich in Richtung Früh verschoben werden. Dies führt zu einer drastischen Erhöhung der erzielbaren Motorleistung, was in Fig. 2 durch die strichpunktierte Linie E angedeutet ist. Als Folge dieses früheren Zündzeitpunktes und Infolge des vollen Expansionsverhältnisses ε von 14:1 sinkt jedoch gleichzeitig die Abgastemperatur, was eine deutliche Abmagerung des Kraftstoff/Luft-Verhältnisses erlaubt. Dadurch kann wegen der verbesserten Ausnutzung der im Zylinder vorhandenen Luft eine weitere Steigerung der Motorleistung erzielt werden. Dies ist durch die durchgezogene Linie F dargestellt. Die letztendlich resultierende erzielbare Motorleistung liegt zufolge des besseren inneren Wirkungsgrades sogar etwas höher, als bei einer optimalen Anpassung des geometrischen Verdichtungsverhältnisses ε_{G}.

Dadurch, dass einerseits der Motor mit einer relativ hohen geometrischen Grundverdichtung ε_{G} von 14:1 konzipiert ist und an der Volllast durch ein spätes Schließen der Einlassventile eine Reduktion der effektiven Verdichtung ε_{E} durchgeführt wird, kann eine deutliche Steigerung des Gesamtwirkungsgrades η des aufgeladenen Otto-Motors erzielt werden. Ein Rückblasen von Kraftstoff in das Saugsystem nach dem unteren Totpunkt kann durch eine leichte Ladungsschichtung im Brennraum während des verzögerten Schließens der Einlassventile verhindert werden.

## Patentansprüche

1. Verfahren zum Betreiben einer vorzugsweise aufgeladenen Brennkraftmaschine mit Fremdzündung, insbesondere einer Viertakt-Brennkraftmaschine, mit zumindest einem Einlassventil pro Zylinder und einer Einrichtung zur Verstellung der Schließzeit des Einlassventils, mit einem unveränderbaren geometrischen Verdichtungsverhältnis (ε_{G}), welches ≥12:1, vorzugsweise ≥13:1, besonders vorzugsweise ≥14:1 beträgt, und einem während des Motorbetriebes an zumindest einem Motorbetriebspunkt durch Veränderung der Steuerzeit (I_{c}) des Einlassventils veränderbaren effektiven Verdichtungsverhältnis (ε_{E}), wobei im Volllastbereich das effektive Verdichtungsverhältnis (ε_{E}) reduziert wird und zur Reduktion des effektiven Verdichtungsverhältnisses (ε_{E}) im Vollastbereich der Schließzeitpunkt (I_{c}) des Einlassventils um 10° bis 70° Kurbelwinkel (KW), vorzugsweise um 20° bis 60° Kurbelwinkel (KW), besonders vorzugsweise um 30° bis 50° Kurbelwinkel (KW) nach Spät verstellt wird, **dadurch gekennzeichnet, dass** zumindest während des Betriebes mit reduziertem Verdichtungsverhältnis (ε_{E}) eine Ladungsschichtung im Brennraum erzeugt wird.

2. Verfahren nach Anspruch 1, **dadurch gekennzeichnet, dass** die Ladungsschichtung durch einen Drall der Einlassströmung erzeugt wird.

3. Verfahren nach Anspruch 2, **dadurch gekennzeichnet, dass** der Drall der Einlassströmung bei maximal möglicher Einlassluftmenge erzeugt wird, wobei vorzugsweise der Lufteinlass durch zwei Einlasskanäle erfolgt, von denen zumindest einer drallerzeugend ausgebildet ist.

4. Verfahren nach einem der Ansprüche 1 bis 3, wobei der Kraftstoff über zumindest eine Einspritzeinrichtung pro Zylinder zugeführt wird, **dadurch gekennzeichnet, dass** zumindest während des Betriebes mit reduziertem Verdichtungsverhältnis (ε_{E}) der Kraftstoff zumindest teilweise saugsynchron eingespritzt wird.

5. Verfahren nach Anspruch 4, **dadurch gekennzeichnet, dass** die Kraftstoffeinspritzung spätestens beim Schließende des Einlassventils beendet wird.

6. Verfahren nach Anspruch 4, **dadurch gekennzeichnet, dass** die Kraftstoffeinspritzung spätestens beim unteren Totpunkt während des Einlasstaktes beendet wird.

7. Verfahren nach einem der Ansprüche 4 bis 6, **dadurch gekennzeichnet, dass** der Kraftstoff direkt in den Brennraum eingespritzt wird.

8. Anwendung des Verfahrens nach einem der Ansprüche 1 bis 7, bei einer fremdgezündeten Viertakt-Brennkraftmaschine mit zumindest zwei Einlasskanälen pro Zylinder, wobei ein Einlasskanal drallerzeugend, vorzugsweise als Tangentialkanal oder Spiralkanal, und ein Einlasskanal als Neutralkanal ausgebildet ist, und wobei in den Brennraum zumindest eine Kraftstoffeinspritzenrichtung zur direkten Kraftstoffeinspritzung einmündet.

9. Anwendung des Verfahrens nach einem der Ansprüche 1 bis 7, bei einer fremdgezündeten Viertakt-Brennkraftmaschine mit zumindest zwei Einlasskanälen pro Zylinder, wobei ein Einlasskanal drallerzeugend, vorzugsweise als Tangentialkanal, und ein Einlasskanal als Neutralkanal ausgebildet ist, und wobei in zumindest einen Einlasskanal eine Kraftstoffeinspritzeinrichtung zur indirekten Kraftstoffeinspritzung einmündet.

## Claims

1. Process for operating a preferably supercharged internal combustion spark-ignition engine, and especially a four-stroke engine, with at least one intake valve per cylinder and means for adjusting the closing time of the intake valve, with a non-variable geometric compression ratio (ε_{G}) of ≥12:1, and preferably ≥13:1, and more preferably, ≥14:1, and an effective compression ratio (ε_{E}) that can be altered during engine operation in at least one operating point of the engine by altering the timing (I_{C}) of the intake valve, the effective compression ratio (ε_{E}) being reduced in the full-load region, and the closing time I_{C} of the intake valve being retarded in order to reduce the effective compression ratio (ε_{E}) in the full-load region by 10° to 70° crank angle KW, and preferably by 20° to 60° crank angle KW, and more preferably by 30° to 50° crank angle KW, **characterized in that** a stratified charge is produced in the combustion chamber, at least during operation at a reduced compression ratio (ε_{E}).

2. Process according to claim 1, **characterized in that** the charge stratification is generated by imparting a swirl motion to the intake flow.

3. Process according to claim 2, **characterized in that** the intake flow swirl is generated with the maximum possible quantity of intake air, preferably by admitting the air via two intake ports, one of which at least is configured so as to generate a swirl.

4. Process according to any of claims 1 to 3, where the fuel is introduced by means of at least one injection device per cylinder, **characterized in that** fuel injection takes place at least partly synchronously with the intake stroke, at least during operation at a reduced compression ratio (ε_{E}).

5. Process according to claim 4, **characterized in that** fuel injection is completed at the latest by the time the intake valve has completed closing.

6. Process according to claim 4, **characterized in that** fuel injection is completed at the latest by the time the bottom dead center of the intake stroke has been reached.

7. Process according to any of claims 4 to 6, **characterized in that** the fuel is injected directly into the combustion chamber.

8. Use of the process according to any of claims 1 to 7, with a four-stroke spark-ignition engine with at least two intake ports per cylinder, where one intake port is configured as a swirl-generating passage, i.e., preferably as a tangential passage or spiral passage, and another intake port is configured as a neutral passage, and where a fuel injection device for direct fuel injection opens into the combustion chamber.

9. Use of the process according to any of claims 1 to 7, with a four-stroke spark-ignition engine with at least two intake ports per cylinder, where one intake port is configured as a swirl-generating passage, i.e., preferably as a tangential passage, and another intake port is configured as a neutral passage, and where a fuel injection device for indirect fuel injection opens into at least one intake port.

## Revendications

1. Procédé d'entraînement d'un moteur à combustion de préférence chargé avec allumage commandé, en particulier d'un moteur à combustion à quatre temps équipé d'au moins une soupape d'admission par cylindre et d'un dispositif de réglage du temps de fermeture de la soupape d'admission avec un rapport volumétrique (ε_{G}) géométrique invariable supérieur ou égal à 12 : 1, de préférence supérieur ou égal à 13 : 1 et en particulier de préférence supérieur ou égal à 14 : 1 et un rapport volumétrique (ε_{E}) variable effectif sur au moins un point de fonctionnement dynamique du moteur grâce à la modification du temps de commande (I_{c}) de la soupape d'admission lors du fonctionnement du moteur, pour lequel, dans la plage de charge complète, le rapport volumétrique (ε_{E}) effectif est réduit et le point de temps de fermeture (I_{c}) de la soupape d'admission est réglé ensuite à un angle de vilebrequin (KW) compris entre 10° et 70°, de préférence à un angle de vilebrequin (KW) compris entre 20° et 60°, en particulier de préférence à un angle de vilebrequin (KW) compris entre 30 ° et 50 ° afin de réduire le rapport volumétrique (ε_{E}) effectif dans la plage de charge complète,
**caractérisé en ce qu'**
au moins au cours du fonctionnement avec un rapport volumétrique (ε_{E}) réduit, un stratification de charge est créé dans la chambre de combustion.

2. Procédé selon la revendication 1,
**caractérisé en ce que**
la stratification de charge est créée par un tourbillon du courant d'admission.

3. Procédé selon la revendication 2,
**caractérisé en ce que**
le tourbillon du courant d'admission est effectué pour la quantité d'air d'admission maximale possible, l'admission d'air étant de préférence assurée par deux canaux d'admission parmi lesquels au moins un est tourbillonnant.

4. Procédé selon les revendications 1 à 3 pour lequel le carburant est amené à l'aide d'au moins un dispositif d'injection par cylindre,
**caractérisé en ce que**
le carburant est injecté par aspiration synchrone au moins partiellement au cours au moins du fonctionnement avec un rapport volumétrique (ε_{E}) réduit.

5. Procédé selon la revendication 4,
**caractérisé en ce que**
l'injection de carburant se termine au plus tard lors de la fermeture de la soupape d'admission.

6. Procédé selon la revendication 4,
**caractérisé en ce que**
l'injection de carburant se termine au plus tard au niveau du point mort bas lors du temps de l'admission.

7. Procédé selon les revendications 4 à 6,
**caractérisé en ce que**
le carburant est directement injecté dans la chambre de combustion.

8. Application du procédé selon les revendications 1 à 7 pour un moteur à combustion à quatre temps à allumage commandé avec au moins deux canaux d'admission par cylindre, un canal d'admission étant un canal à tourbillon, de préférence comme canal tangentiel ou en spirale, et un canal d'admission étant un canal neutre, et pour laquelle au moins un dispositif d'injection de carburant débouche dans la chambre de combustion pour une injection directe de carburant.

9. Application du procédé selon les revendications 1 à 7 pour un moteur à combustion à quatre temps à allumage commandé avec au moins deux canaux d'admission par cylindre, un canal d'admission étant un canal à tourbillon, de préférence comme canal tangentiel et un canal d'admission étant un canal neutre, et pour laquelle un dispositif d'injection de carburant débouche dans au moins un canal d'admission pour une injection directe de carburant.
